(19) Europäisches Patentamt
European Patent Office
Office européen des brevets

(11) **EP 3 510 417 B1**

(12) **EUROPÄISCHE PATENTSCHRIFT**

(45) Veröffentlichungstag und Bekanntmachung des Hinweises auf die Patenterteilung:
**23.12.2020 Patentblatt 2020/52**

(21) Anmeldenummer: **17739879.9**

(22) Anmeldetag: **14.07.2017**

(51) Int Cl.:
*G01S 5/16* *(2006.01)*    *G01S 1/70* *(2006.01)*

(86) Internationale Anmeldenummer:
**PCT/EP2017/025208**

(87) Internationale Veröffentlichungsnummer:
**WO 2018/046133 (15.03.2018 Gazette 2018/11)**

(54) **SYSTEM UND VERFAHREN ZUR AUSRICHTUNGS- UND POSITIONSBESTIMMUNG EINES FAHRZEUGS INNERHALB EINER ANLAGE**

SYSTEM AND METHOD FOR DETERMINING THE ORIENTATION AND POSITION OF A VEHICLE WITHIN A SYSTEM

SYSTÈME ET PROCÉDÉ POUR DÉTERMINER L'ORIENTATION ET LA POSITION D'UN VÉHICULE À L'INTÉRIEUR D'UNE INSTALLATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.09.2016 DE 102016010999**

(43) Veröffentlichungstag der Anmeldung:
**17.07.2019 Patentblatt 2019/29**

(73) Patentinhaber: **SEW-EURODRIVE GmbH & Co. KG 76646 Bruchsal (DE)**

(72) Erfinder:
• WANJEK, Andreas
  68753 Waghäusel (DE)
• HUA, Zhidong
  76646 Bruchsal (DE)
• LINDENFELSER, Michael
  76646 Bruchsal (DE)

(56) Entgegenhaltungen:
EP-A1- 2 913 688    DE-A1-102013 001 358

**Beschreibung**

Die Erfindung betrifft ein System und ein Verfahren zur Ausrichtungsbestimmung eines Fahrzeugs innerhalb einer Anlage.

**Aus der** DE 10 2013 001 358 A1 **ist als nächstliegender Stand der Technik ein Verfahren zum Betreiben eines Systems mit Datenübertragung zwischen einem stationären Modul und einem Fahrzeug bekannt.**

**Aus der** EP 2 913 688 A1 **ist ein Navigationsassistenzsystem mit Lichtmarkierungen bekannt.**

Der Erfindung liegt daher die Aufgabe zugrunde, ein System und Verfahren zur Ausrichtungsbestimmung eines Fahrzeugs innerhalb einer Anlage weiterzubilden, wobei die Sicherheit verbessert werden soll.

Erfindungsgemäß wird die Aufgabe bei dem System nach den in Anspruch 1 angegebenen Merkmalen und bei dem Verfahren nach den in Anspruch 9 angegebenen Merkmalen gelöst.

Wichtige Merkmale der Erfindung bei dem System zur Ausrichtungsbestimmung eines Fahrzeugs innerhalb einer Anlage, aufweisend das Fahrzeug und ein stationär angeordnetes Sendemodul,

wobei das Fahrzeug auf einer Verfahrfläche der Anlage fahrbar ist und ein Empfangsmodul aufweist, sind, dass das Sendemodul eine Lichtquelle, insbesondere eine Leuchtdiode, und ein erstes Polarisationsfilter aufweist, wobei das erste Polarisationsfilter als lineares Polarisationsfilter ausgeführt ist, so dass linear polarisiertes Licht vom Sendemodul aussendbar ist,

wobei das Empfangsmodul einen Lichtsensor, einen Flüssigkristall, ein Steuerungsmittel für den Flüssigkristall und einen zweiten Polarisationsfilter aufweist, wobei das zweite Polarisationsfilter als lineares Polarisationsfilter ausgeführt ist,

wobei das zweite Polarisationsfilter zwischen dem Lichtsensor und dem Flüssigkristall angeordnet ist,

wobei der Flüssigkristall mittels des Steuerungsmittels derart ansteuerbar ist, dass die Polarisation von dem den Flüssigkristall passierenden linear polarisierten Licht um einen ersten Winkel oder um einen zweiten Winkel, insbesondere um 0° oder um 90°, gedreht wird, wobei der erste Winkel und der zweite Winkel ungleich sind,

wobei Licht von der Lichtquelle, welches das erste Polarisationsfilter, dann den Flüssigkristall und dann das zweite Polarisationsfilter durchlaufen hat, mittels des Lichtsensors detektierbar ist.

Von Vorteil ist dabei, dass mittels des Systems zwei Messungen mit verschieden angesteuertem Flüssigkristall zur Bestimmung der Ausrichtung des Fahrzeugs ausführbar sind. Bei beiden Messungen passiert das Licht dieselben Polarisationsfilter und wird von demselben Lichtsensor detektiert. Somit sind Messungenauigkeiten bei der Auswertung des Signals des Lichtsensors herausrechenbar. Vorteilhafterweise heben sich Messungenauigkeiten bei einer Division der Messwerte gegenseitig auf. Somit ist die Fehleranfälligkeit bei der Bestimmung der Ausrichtung reduziert.

Bei einer vorteilhaften Ausgestaltung weist das Sendemodul eine Stromquelle für die Lichtquelle und einen Wandler auf, wobei die Lichtquelle steuerbar ist mittels des Wandlers, indem der Wandler die Stromquelle ansteuert. Von Vorteil ist dabei, dass das Licht der Lichtquelle modulierbar ist, insbesondere wobei die Lichtquelle intensitätsmoduliertes Licht erzeugt. Vorteilhafterweise ist eine Identitätsinformation des Sendemoduls und/oder ein Steuerbefehl und/oder eine Statusinformation aufmodulierbar.

Bei einer vorteilhaften Ausgestaltung erzeugt die Lichtquelle intensitätsmoduliertes Licht. Von Vorteil ist dabei, dass eine Identitätsinformation des Sendemoduls und/oder ein Steuerbefehl und/oder eine Statusinformation auf das Licht aufmodulierbar ist.

Bei einer vorteilhaften Ausgestaltung ist der Wandler mit einer zentralen, insbesondere externen, Steuerung verbunden, insbesondere mittels eines Datenbusses, wobei Steuerungsbefehle der Steuerung mittels des Wandlers auf das Licht der Lichtquelle aufmodulierbar sind, insbesondere mit einer Frequenz zwischen 100 kHz und 10 MHz. Von Vorteil ist dabei, dass das System zur Kommunikation der Steuerung mit dem Fahrzeug verwendbar ist. Vorteilhafterweise ist eine hohe Datenübertragungsrate ermöglicht. Die Modulation des Lichtes ist für das menschliche Auge nicht erkennbar.

Bei einer vorteilhaften Ausgestaltung weist das Empfangsmodul einen Empfänger und ein Auswertemittel auf, wobei der Empfänger eingerichtet ist, ein Signal des Lichtsensors, insbesondere einen Strom, zu messen, wobei das Auswertemittel eingerichtet ist, aus zwei Messwerten des Lichtsensors die Ausrichtung des Fahrzeugs auf der Verfahrfläche zu bestimmen. Von Vorteil ist dabei, dass die Auswertung der Messwerte lokal auf dem Fahrzeug erfolgt, so dass die ausgewertete Ausrichtung des Fahrzeugs unmittelbar zur Steuerung des Fahrzeugs verwendbar ist.

Bei einer vorteilhaften Ausgestaltung weist das Fahrzeug eine Fahrzeugsteuerung auf, insbesondere wobei das Fahrzeug als fahrerloses Transportfahrzeug ausgeführt ist, wobei die Fahrzeugsteuerung mit dem Auswertemittel verbunden ist, wobei die Fahrzeugsteuerung eingerichtet ist, die von dem Auswertemittel bestimmte Ausrichtung des Fahrzeugs zur Steuerung des Fahrzeugs zu verwenden. Von Vorteil ist dabei, dass das Fahrzeug autonom steuerbar ist.

Bei einer vorteilhaften Ausgestaltung ist das Empfangsmodul an der Oberseite des Fahrzeugs angeordnet. Von Vorteil ist dabei, dass in vertikaler Richtung zwischen dem Sendemodul und dem Empfangsmodul das Licht unblockierbar übertragbar ist. Somit ist ein ununterbrochener Empfang des Lichtes ermöglicht.

Bei einer vorteilhaften Ausgestaltung ist das stationär angeordnete Sendemodul an der Oberseite des Innenraums einer die Anlage aufnehmenden Halle angeordnet. Von Vorteil ist dabei, dass in vertikaler Richtung zwischen dem Sendemodul und dem Empfangsmodul das Licht unblockierbar übertragbar ist.

Bei einer vorteilhaften Ausgestaltung ist das verwendete Licht sichtbares Licht oder Infrarotlicht. Von Vorteil ist dabei, dass das Licht zur Beleuchtung der Anlage verwendbar ist. Vorteilhafterweise sind einfache Lichtsensoren verwendbar, beispielsweise eine Photodiode oder ein Phototransistor. Vorteilhafterweise sind einfache Lichtquellen verwendbar, beispielsweise eine Leuchtdiode.

Bei einer vorteilhaften Ausgestaltung weist das System ein dem stationär angeordneten Sendemodul zugeordnetes stationär angeordnetes Empfangsmodul auf, wobei das stationär angeordnete Empfangsmodul und das Empfangsmodul des Fahrzeugs gleichartig sind, wobei das Fahrzeug ein Sendemodul aufweist, wobei das Sendemodul des Fahrzeugs und das stationär angeordnete Sendemodul gleichartig sind, wobei mittels der Sendemodule und Empfangsmodule eine bidirektionale Datenübertragung zwischen dem Fahrzeug und der zentralen Steuerung ausführbar ist. Von Vorteil ist dabei, dass mittels des stationären Empfangsmoduls und des Sendemoduls auf dem Fahrzeug eine redundante Bestimmung der Ausrichtung des Fahrzeugs ermöglicht ist. Somit ist ein eventueller Messfehler bei der Bestimmung der Ausrichtung durch Mittelwertbildung reduzierbar. Die Sicherheit ist verbessert.

Bei einer vorteilhaften Ausgestaltung weist das System zur Ausrichtungsbestimmung mehrere stationär angeordnete Sendemodule auf, wobei jedes stationär angeordnete Sendemodul eine Identitätsinformation aufweist, die auf das Licht des jeweiligen stationär angeordneten Sendemoduls aufmodulierbar ist, wobei jedem stationär angeordneten Sendemodul ein Positionsbereich auf der Verfahrfläche eindeutig zuordenbar ist mittels der Identitätsinformation, insbesondere wobei das System eine Speichereinheit aufweist, in der die jeweiligen Positionsbereiche der jeweiligen Identitätsinformation zugeordnet gespeichert sind, wobei die Speichereinheit auslesbar ist von dem jeweiligen Auswertemittel. Von Vorteil ist dabei, dass dem Fahrzeug die Ausrichtung und der Positionsbereich eindeutig zuordenbar sind.

Bei einer vorteilhaften Ausgestaltung weist jedes stationär angeordnete Sendemodul einen jeweiligen Sendekegel auf. Von Vorteil ist dabei, dass dem Fahrzeug der Positionsbereich eines jeweiligen stationär angeordneten Sendemoduls eindeutig zuordenbar ist, sobald das Fahrzeug sich in dem jeweiligen Sendekegel des jeweiligen stationär angeordneten Sendemoduls aufhält und dessen Licht detektiert.

Bei einer vorteilhaften Ausgestaltung überlappen die Sendekegel von benachbarten stationär angeordneten Sendemodulen zumindest teilweise. Von Vorteil ist dabei, dass bei der Positionsbestimmung die Ortsauflösung verbessert ist. Vorteilhafterweise befindet sich das Fahrzeug in einem ersten Positionsbereich im Sendekegel eines ersten stationär angeordneten Sendemoduls oder in einem zweiten Positionsbereich im Sendekegel eines zweiten stationär angeordneten Sendemoduls oder in einem dritten Positionsbereich im Sendekegel des ersten stationär angeordneten Sendemoduls und im Sendekegel des zweiten stationär angeordneten Sendemoduls, wobei das erste stationär angeordnete Sendemodul und das zweite stationär angeordnete Sendemodul benachbart sind. Vorteilhafterweise sind der erste Positionsbereich, der zweite Positionsbereich und der dritte Positionsbereich kleiner als der einem jeweiligen stationär angeordneten Sendemodul zugeordnete Positionsbereich. Dabei ist der dritte Positionsbereich die Schnittmenge aus dem Positionsbereich des ersten stationär angeordneten Sendemoduls und dem Positionsbereich des zweiten stationär angeordneten Sendemoduls.

Bei einer vorteilhaften Ausgestaltung ist die gesamte Verfahrfläche mittels der stationär angeordneten Sendemodule beleuchtet, insbesondere als Beleuchtung der Anlage. Von Vorteil ist dabei, dass dem Fahrzeug auf der gesamten Verfahrfläche ein Positionsbereich mittels des Systems zuordenbar ist.

Wichtige Merkmale der Erfindung bei dem Verfahren zur Positionsbestimmung eines Fahrzeugs innerhalb einer Anlage mittels eines Systems zur Positionsbestimmung wie zuvor beschrieben beziehungsweise nach mindestens einem der auf das System bezogenen Ansprüche, sind dass das Verfahren die zeitlich aufeinanderfolgenden Verfahrensschritte aufweist:

wobei in einem ersten Verfahrensschritt, insbesondere in einer ersten Messung, linear polarisiertes Licht des stationär angeordneten Sendemoduls den Flüssigkristall durchläuft, wobei dieser derart angesteuert wird, dass die Polarisation des Lichtes um einen ersten Winkel gedreht wird, wobei das Licht zumindest teilweise das zweite Polarisationsfilter passiert und die Intensität $I_1$ des Lichts von dem Lichtsensor bestimmt wird,

wobei in einem zweiten Verfahrensschritt, insbesondere in einer zweiten Messung, linear polarisiertes Licht des stationär angeordneten Sendemoduls den Flüssigkristall durchläuft, wobei dieser derart angesteuert wird, dass die Polarisation des Lichtes um einen zweiten Winkel gedreht wird, wobei das Licht zumindest teilweise das zweite Polarisationsfilter passiert und die Intensität $I_2$ des Lichts von dem Lichtsensor bestimmt wird,

wobei in einem dritten Verfahrensschritt aus den Intensitäten $I_1$, und $I_2$ die Ausrichtung des Fahrzeugs auf der Verfahrfläche bestimmt wird,

wobei der erste Winkel und der zweite Winkel ungleich sind, insbesondere wobei der erste Winkel und der zweite Winkel sich betragsmäßig um 90° unterscheiden oder sich betragsmäßig um einen Wert zwischen 80° und 100° unterscheiden.

Von Vorteil ist dabei, dass mittels des Verfahrens zwei Messungen mit verschieden angesteuertem Flüssigkristall zur Bestimmung der Ausrichtung des Fahrzeugs ausführbar sind. Bei beiden Messungen passiert das Licht dieselben Polarisationsfilter und wird von demselben Lichtsensor detektiert. Somit sind Messungenauigkeiten bei der Auswertung des Signals des Lichtsensors herausrechenbar. Vorteilhafterweise heben sich Messungenauigkeiten bei einer Division der Messwerte gegenseitig auf. Somit ist die Fehleranfälligkeit bei der Bestimmung der Ausrichtung reduziert.

Bei einer vorteilhaften Ausgestaltung wird die Ausrichtung des Fahrzeugs durch einen Winkelversatz $\alpha$ relativ zu einem Referenzfahrzeug bestimmt, insbesondere wobei das zweite Polarisationsfilter des Referenzfahrzeugs parallel zum ersten Polarisationsfilter angeordnet ist, wobei der Winkelversatz $\alpha$ aus den Intensitäten $I_1$ und $I_2$ berechnet wird gemäß

$$\alpha = \arctan \frac{I_1}{I_2}.$$

Von Vorteil ist dabei, dass die Ausrichtung des Fahrzeugs, insbesondere bei einer Winkeldifferenz von 90°, in einfacher Art und Weise berechenbar ist.

Bei einer vorteilhaften Ausgestaltung wird ein Steuerbefehl einer zentralen Steuerung auf das Licht des stationär angeordneten Sendemoduls aufmoduliert, wobei das Licht des stationär angeordneten Sendemoduls von dem Fahrzeug ausgewertet wird und das Fahrzeug gemäß dem Steuerbefehl gesteuert wird, insbesondere wobei das Fahrzeug unter Berücksichtigung der gemessenen Ausrichtung des Fahrzeugs und des Steuerbefehls gesteuert wird. Von Vorteil ist dabei, dass die Auswertung der Messwerte lokal auf dem Fahrzeug erfolgt, so dass die ausgewertete Ausrichtung des Fahrzeugs unmittelbar zur Steuerung des Fahrzeugs verwendbar ist. Das Fahrzeug ist autonom steuerbar.

Bei einer vorteilhaften Ausgestaltung weist das System mehrere stationär angeordnete Sendemodule auf, denen jeweils eine Identitätsinformation zugeordnet wird, wobei die jeweilige Identitätsinformation auf das Licht des jeweiligen stationär angeordneten Sendemoduls aufmoduliert wird, wobei dem Fahrzeug ein Positionsbereich auf der Verfahrfläche zugeordnet wird, indem die Identitätsinformation aus dem von dem Fahrzeug empfangenen Licht ausgewertet wird. Von Vorteil ist dabei, dass dem Fahrzeug die Ausrichtung und der Positionsbereich eindeutig zuordenbar sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

In der Figur 1 ist eine schematische Seitenansicht des erfindungsgemäßen Systems zur Positionsbestimmung eines Fahrzeugs innerhalb einer Anlage gezeichnet.

Figur 2 zeigt eine schematische Draufsicht auf das Fahrzeug 13 und ein Referenzfahrzeug 13' in zwei Verdrehwinkelzuständen, die um den Verdrehwinkel $\alpha$ gegeneinander verdreht sind.

In Figur 3 ist eine Anordnung von Polarisationsfiltern des erfindungsgemäßen Systems zur Positionsbestimmung eines Fahrzeugs innerhalb einer Anlage bei einer ersten Messung gezeigt.

In Figur 4 ist die Anordnung von Polarisationsfiltern des erfindungsgemäßen Systems zur Positionsbestimmung eines Fahrzeugs innerhalb einer Anlage bei einer zweiten Messung gezeigt.

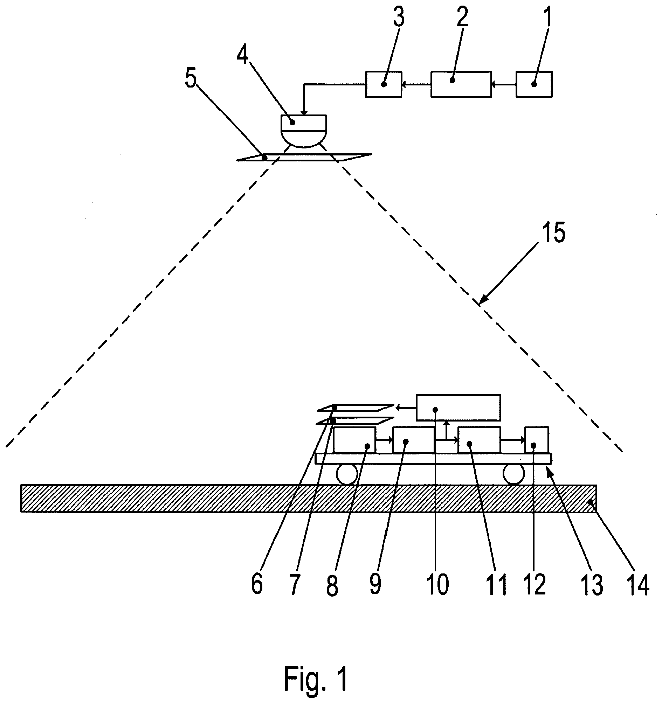

Das in Figur 1 dargestellte System zur Positionsbestimmung eines Fahrzeugs innerhalb einer Anlage weist ein stationär angeordnetes Sendemodul und das Fahrzeug 13 auf. An einer Oberseite des Fahrzeugs 13 ist ein Empfangsmodul angeordnet.

Die Anlage weist eine Verfahrfläche auf, die einen Boden 14 aufweist. Das Fahrzeug 13 ist auf der Verfahrfläche fahrbar angeordnet.

Die Anlage ist beispielsweise eine Produktionsanlage, wobei das Fahrzeug 13 beispielsweise Produktionsmaterial von einem Lager zu einer Produktionsstation transportiert.

Das stationär angeordnete Sendemodul weist einen Sendekegel 15 auf, der sich von dem stationär angeordneten Sendemodul zu der Verfahrfläche erstreckt. Dabei ist das stationär angeordnete Sendemodul derart ausgerichtet, dass der Sendekegel 15 vom Empfangsmodul des Fahrzeugs 13 detektierbar ist. Vorzugsweise ist das stationär angeordnete Sendemodul an der Oberseite des Innenraums einer die Anlage aufnehmenden Halle, insbesondere einer Produktionshalle, angeordnet, insbesondere an der Decke der Halle.

Das stationär angeordnete Sendemodul weist eine Lichtquelle 4, insbesondere eine Leuchtdiode, ein erstes Polarisationsfilter 5, eine Stromquelle 3 und einen Wandler 2 auf. Der Wandler 2 ist mit einer zentralen Steuerung 1 der Anlage verbunden, insbesondere mittels eines Datenbusses. Das erste Polarisationsfilter 5 ist vor der Lichtquelle 4 angeordnet. Das erste Polarisationsfilter 5 ist als lineares Polarisationsfilter ausgeführt, so dass von dem unpolarisierten Licht der Lichtquelle 4, das auf das erste Polarisationsfilter 5 trifft, nur der linear polarisierte Anteil das erste Polarisationsfilter 5 passiert.

Alternativ ist die Lichtquelle 4 als Quelle linear polarisierten Lichts ausgeführt, insbesondere wobei das erste Polarisationsfilter 5 in die Lichtquelle 4 integriert ist.

Die Steuerung 1 sendet einen Steuerbefehl an den Wandler 2, der die Stromquelle 3 der Lichtquelle 4 derart ansteuert, dass die Lichtquelle 4 moduliertes Licht abstrahlt. Dabei wird die Intensität des Lichtes moduliert. Das modulierte Licht weist den Steuerbefehl und/oder eine Identitätsinformation des stationär angeordneten Sendemoduls auf. Die Lichtquelle 4 erzeugt sichtbares Licht oder Infrarotlicht.

Das Empfangsmodul weist einen Lichtsensor 8, insbesondere eine Photodiode, ein zweites Polarisationsfilter 7, einen Flüssigkristall 6, einen Empfänger 9, ein Auswertemittel 11 und ein Steuerungsmittel 10 für den Flüssigkristall 6 auf.

Vor dem Lichtsensor 8 sind der Flüssigkristall 6 und das zweite Polarisationsfilter 7 angeordnet, wobei das zweite Polarisationsfilter 7 zwischen dem Flüssigkristall 6 und dem Lichtsensor 8 angeordnet ist.

Der Flüssigkristall 6 ist mittels des Steuerungsmittels 10 ansteuerbar derart, dass die Polarisation von linear polarisiertem Licht um 0° oder 90° drehbar ist. Dazu wird von dem Steuerungsmittel 10 eine Spannung an den Flüssigkristall 6 angelegt, die die Moleküle des Flüssigkristalls 6 ausrichtet. Abhängig von der an den Flüssigkristall 6 angelegten Spannung wird die Polarisation des auf den Flüssigkristall 6 auftreffenden Lichts um 0° oder um 90° gedreht.

Das zweite Polarisationsfilter 7 ist als lineares Polarisationsfilter ausgeführt, so dass nur der Anteil des linear polarisierten Lichts, das den Flüssigkristall 6 passiert hat, der parallel zum zweiten Polarisationsfilter 7 polarisiert ist, das zweite Polarisationsfilter 7 passiert.

Der Lichtsensor 8 erzeugt einen zu der Intensität des auftreffenden Lichtes proportionalen elektrischen Strom der von dem Empfänger 9 gemessen wird. Der Empfänger 9 ist mit dem Auswertemittel 11 verbunden. Das Auswertemittel 11 bestimmt aus der Lichtintensität in Abhängigkeit von der Einstellung des Flüssigkristalls 6 die Ausrichtung des Empfangsmoduls, insbesondere des Fahrzeugs 13, relativ zum stationär angeordneten Sendemodul.

Vorzugsweise wertet das Auswertemittel 11 auch die auf das Licht aufmodulierte Identitätsinformation des Sendemoduls und/oder den Steuerbefehl aus.

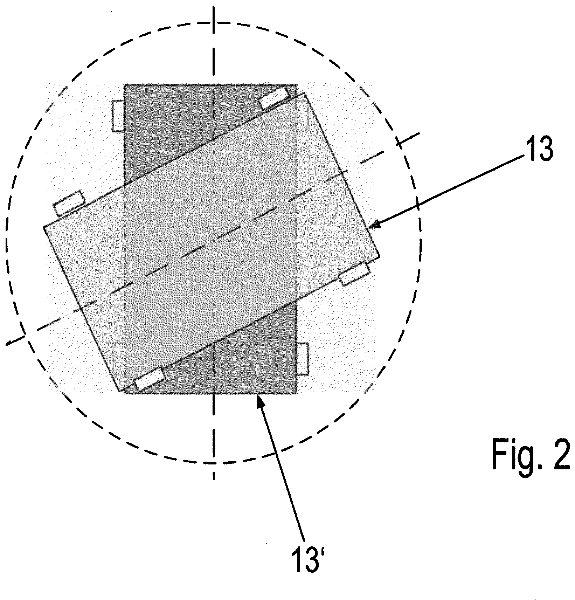

Wie in Figur 2 gezeigt, ist die Ausrichtung des Fahrzeugs 13 auf der Verfahrfläche durch den Verdrehwinkel $\alpha$ gekennzeichnet. Der Verdrehwinkel $\alpha$ wird relativ zu dem Referenzfahrzeug 13' bestimmt, dessen Empfangsmodul parallel zu dem stationär angeordneten Sendemodul ausgerichtet ist, insbesondere wobei das erste Polarisationsfilter 5 und das zweite Polarisationsfilter 7 parallel ausgerichtet sind.

Der Winkelversatz $\alpha$ zwischen dem Fahrzeug 13 und dem parallel zu dem stationär angeordneten Sendemodul ausgerichteten Referenzfahrzeug 13' wird aus zwei Messungen bestimmt. Bei der ersten Messung wird das den Flüssigkristall 6 durchlaufende linear polarisierte Licht vom Flüssigkristall 6 um 90° gedreht und bei der zweiten Messung passiert das auf den Flüssigkristall 6 treffende Licht den Flüssigkristall 6 unverändert.

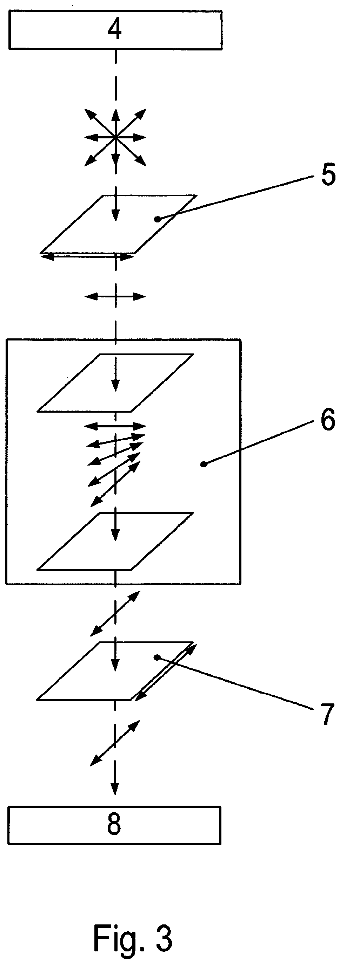

In Figur 3 ist die Messanordnung für die erste Messung dargestellt. Das unpolarisierte Licht der Lichtquelle 4 fällt auf das erste Polarisationsfilter 5, so dass linear polarisiertes Licht das erste Polarisationsfilter 5 passiert. Dieses Licht fällt auf den Flüssigkristall 6. Bei der ersten Messung ist der Flüssigkristall 6 derart von dem Steuerungsmittel 10 angesteuert, dass die Polarisierung des linear polarisierten Lichtes um 90° gedreht wird. Dieses Licht fällt auf das zweite Polarisationsfilter 7, wobei nur der Anteil des Lichtes, der parallel zu dem zweiten Polarisationsfilter 7 polarisiert ist, das zweite Polarisationsfilter 7 passiert und vom Lichtsensor 8 erfasst wird.

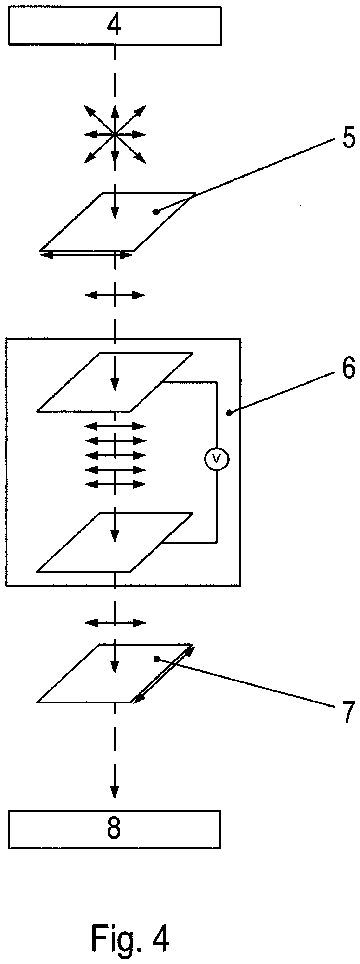

In Figur 4 ist die Messanordnung für die zweite Messung dargestellt. Das unpolarisierte Licht der Lichtquelle 4 fällt auf das erste Polarisationsfilter 5, so dass linear polarisiertes Licht das erste Polarisationsfilter 5 passiert. Dieses Licht fällt auf den Flüssigkristall 6. Bei der zweiten Messung ist der Flüssigkristall 6 derart von dem Steuerungsmittel 10 angesteuert, dass die Polarisierung des linear polarisierten Lichtes um 0° gedreht wird. Bei der zweiten Messung passiert das Licht den Flüssigkristall unverändert. Dieses Licht fällt auf das zweite Polarisationsfilter 7, wobei nur der Anteil des Lichtes, der parallel zu dem zweiten Polarisationsfilter 7 polarisiert ist, das zweite Polarisationsfilter 7 passiert und vom Lichtsensor 8 erfasst wird.

Der Winkelversatz $\alpha$ zwischen dem Fahrzeug 13 und dem parallel zu dem stationär angeordneten Sendemodul ausgerichteten Referenzfahrzeug 13' wird von dem Auswertemittel 11 aus der in der ersten Messung gemessenen Intensität $I_1$ und der in der zweiten Messung gemessenen Intensität $I_2$ wie folgt berechnet:

$$\alpha = \arctan \frac{I_1}{I_2}$$

Das Fahrzeug 13 weist eine Fahrzeugsteuerung 12 zur Steuerung des Fahrzeugs 13 auf. Die Fahrzeugsteuerung 12 ist mit dem Auswertemittel 11 verbunden. Das Auswertemittel 11 überträgt die ausgewertete aktuelle Ausrichtung des Fahrzeugs 13 an die Fahrzeugsteuerung 12, die die aktuelle Ausrichtung zur Steuerung der Fahrtrichtung des Fahrzeugs 13 verwendet.

Vorzugsweise ist das Fahrzeug 13 als fahrerloses Transportfahrzeug ausgeführt. Dabei wird die Fahrzeugsteuerung 12 zur Steuerung des fahrerlosen Transportfahrzeugs verwendet.

Die erste Messung und die zweite Messung erfolgen zeitlich nacheinander. Dabei wird die Zeitspanne zwischen der ersten Messung und der zweiten Messung möglichst kurz gewählt.

In einem weiteren nicht dargestellten Ausführungsbeispiel weist das Fahrzeug 13 sowohl das Empfangsmodul als auch ein weiteres Sendemodul auf. Neben dem stationär angeordneten Sendemodul ist ein stationär angeordnetes Empfangsmodul angeordnet, das zu der Verfahrfläche hin ausgerichtet ist. Dabei ist das weitere Sendemodul gleichartig zum stationär angeordneten Sendemodul. Das weitere Empfangsmodul ist gleichartig zum Empfangsmodul.

Somit ist eine bidirektionale Kommunikation zwischen dem Fahrzeug 13 und der Steuerung 1 der Anlage ermöglicht mittels der Sendemodule und Empfangsmodule. Beispielsweise sind der von dem Fahrzeug bestimmten Positionswert und/oder die Ausrichtung an das stationär angeordnete Sendemodul übertragbar.

Vorzugsweise ist das stationär angeordnete Empfangsmodul ebenfalls zur Bestimmung der Ausrichtung des Fahrzeugs 13 eingerichtet. Die von dem Fahrzeug 13 bestimmte Ausrichtung und die von dem stationär angeordneten Empfangsmodul bestimmte Ausrichtung sind von der Steuerung 1 vergleichbar, so dass die Messgenauigkeit durch Mittelwertbildung verbessert ist.

In einem weiteren nicht dargestellten Ausführungsbeispiel weist das System zur Positionsbestimmung eines Fahrzeugs mehrere stationär angeordnete Sendemodule auf, die jeweils einen Sendekegel aufweisen, der sich von dem jeweiligen stationär angeordneten Sendemodul zu der Verfahrfläche erstreckt.

Vorzugsweise überlappen die Sendekegel von benachbarten stationär angeordneten Sendemodulen zumindest teilweise. Vorzugsweise ist die gesamte Verfahrfläche mittels der stationär angeordneten Sendemodule beleuchtet, so dass überall auf der Verfahrfläche das Fahrzeug vom Licht mindestens eines stationär angeordneten Sendemoduls beleuchtet ist. Vorzugsweise sind die stationär angeordneten Sendemodule als Arrays angeordnet.

Jedes stationär angeordnete Sendemodul weist eine jeweilige Identitätsinformation auf, die auf das Licht der jeweiligen Lichtquelle aufmoduliert übertragen wird. Somit ist dem Fahrzeug 13 ein zu dem jeweiligen Sendekegel zugeordneter Positionsbereich auf der Verfahrfläche und eine Fahrtrichtung relativ zum jeweiligen stationär angeordneten Sendemodul vom Auswertemittel 11 zuordenbar. Dazu weist das Auswertemittel 11 eine Speichereinheit auf, in der die jeweilige Identitätsinformation und der zu der jeweiligen Identitätsinformation zugeordnete jeweilige Positionsbereich gespeichert sind.

Das Auswertemittel 11 überträgt die ausgewertete aktuelle Position und Ausrichtung des Fahrzeugs 13 an die Fahrzeugsteuerung 12, die diese zur Steuerung der Fahrtrichtung des Fahrzeugs 13 verwendet.

**Bezugszeichenliste**

1 Steuerung
2 Wandler
3 Stromquelle
4 Lichtquelle
5 erstes Polarisationsfilter
6 Flüssigkristall
7 zweites Polarisationsfilter
8 Lichtsensor
9 Empfänger
10 Steuerungsmittel
11 Auswertemittel
12 Fahrzeugsteuerung
13 Fahrzeug
13' Referenzfahrzeug
14 Boden einer Verfahrfläche
15 Sendekegel

**Patentansprüche**

1. System zur **Ausrichtung**sbestimmung eines Fahrzeugs (13) innerhalb einer Anlage, aufweisend das Fahrzeug (13) und ein stationär angeordnetes Sendemodul,
   wobei das Fahrzeug (13) auf einer Verfahrfläche der Anlage fahrbar ist und ein Empfangsmodul aufweist, das Sendemodul eine Lichtquelle (4), insbesondere eine Leuchtdiode, und ein erstes Polarisationsfilter (5) aufweist, wobei das erste Polarisationsfilter (5) als lineares Polarisationsfilter ausgeführt ist, so dass linear polarisiertes Licht vom Sendemodul aussendbar ist,
   **dadurch gekennzeichnet, dass**
   das Empfangsmodul einen Lichtsensor (8), einen Flüssigkristall (6), ein Steuerungsmittel (10) für den Flüssigkristall und einen zweiten Polarisationsfilter (7) aufweist, wobei das zweite Polarisationsfilter als lineares Polarisationsfilter ausgeführt ist,
   wobei das zweite Polarisationsfilter (7) zwischen dem Lichtsensor (8) und dem Flüssigkristall (6) angeordnet ist,
   wobei der Flüssigkristall (6) mittels des Steuerungsmittels (10) derart ansteuerbar ist, dass die Polarisation von dem den Flüssigkristall passierenden linear polarisierten Licht um einen ersten Winkel oder um einen zweiten Winkel, insbesondere um 0° oder um 90°, gedreht wird, wobei der erste Winkel und der zweite Winkel ungleich sind,
   wobei Licht von der Lichtquelle (4), welches das erste Polarisationsfilter (5), dann den Flüssigkristall (6) und dann das zweite Polarisationsfilter (7) durchlaufen hat, mittels des Lichtsensors (8) detektierbar ist,
   wobei das Empfangsmodul einen Empfänger (9) und ein Auswertemittel (11) aufweist,
   wobei der Empfänger (9) eingerichtet ist, ein Signal des Lichtsensors (8), nämlich einen Strom, zu messen,
   wobei das Auswertemittel (11) eingerichtet ist, aus zwei Messwerten des Lichtsensors (8) die Ausrichtung des Fahrzeugs (13) auf der Verfahrfläche zu bestimmen,
   wobei das System ein dem stationär angeordneten Sendemodul zugeordnetes stationär angeordnetes Empfangsmodul aufweist, wobei das stationär angeordnete Empfangsmodul und das Empfangsmodul des Fahrzeugs (13) gleichartig sind, wobei das Fahrzeug (13) ein Sendemodul aufweist, wobei das Sendemodul des Fahrzeugs und das stationär angeordnete Sendemodul gleichartig sind, wobei mittels der Sendemodule und Empfangsmodule eine bidirektionale Datenübertragung zwischen dem Fahrzeug (13) und der zentralen Steuerung (1) ausführbar ist.

2. System nach Anspruch 1,
**dadurch gekennzeichnet, dass**
das Sendemodul eine Stromquelle (3) für die Lichtquelle (4) und einen Wandler (2) aufweist, wobei die Lichtquelle (4) steuerbar ist mittels des Wandlers (2), indem der Wandler (2) die Stromquelle (3) ansteuert, und/oder dass die Lichtquelle (4) intensitätsmoduliertes Licht erzeugt.

3. System nach Anspruch 2,
**dadurch gekennzeichnet, dass**
der Wandler (2) mit einer zentralen, insbesondere externen, Steuerung (1) verbunden ist, insbesondere mittels eines Datenbusses, wobei Steuerungsbefehle der Steuerung (1) mittels des Wandlers (2) auf das Licht der Lichtquelle (4) aufmodulierbar sind mit einer Frequenz zwischen 100 kHz und 10 MHz.

4. System nach mindestens einem der vorangegangenen Ansprüche,
**dadurch gekennzeichnet, dass**
das Fahrzeug (13) eine Fahrzeugsteuerung (12) aufweist, wobei das Fahrzeug (13) als fahrerloses Transportfahrzeug ausgeführt ist, wobei die Fahrzeugsteuerung (12) mit dem Auswertemittel (11) verbunden ist, wobei die Fahrzeugsteuerung (12) eingerichtet ist, die von dem Auswertemittel (11) bestimmte Ausrichtung des Fahrzeugs (13) zur Steuerung des Fahrzeugs (13) zu verwenden.

5. System nach mindestens einem der vorangegangenen Ansprüche,
**dadurch gekennzeichnet, dass**
das Empfangsmodul an der Oberseite des Fahrzeugs (13) angeordnet ist, und/oder dass das stationär angeordnete Sendemodul an der Oberseite des Innenraums einer die Anlage aufnehmenden Halle angeordnet ist.

6. System nach mindestens einem der vorangegangenen Ansprüche,
**dadurch gekennzeichnet, dass**

das verwendete Licht sichtbares Licht oder Infrarotlicht ist.

7. System nach mindestens einem der vorangegangenen Ansprüche,
**dadurch gekennzeichnet, dass**
das System zur Ausrichtungsbestimmung mehrere stationär angeordnete Sendemodule aufweist, wobei jedes stationär angeordnete Sendemodul eine Identitätsinformation aufweist, die auf das Licht des jeweiligen stationär angeordneten Sendemoduls aufmodulierbar ist, wobei jedem stationär angeordneten Sendemodul ein Positionsbereich auf der Verfahrfläche eindeutig zuordenbar ist mittels der Identitätsinformation, wobei das System eine Speichereinheit aufweist, in der die jeweiligen Positionsbereiche der jeweiligen Identitätsinformation zugeordnet gespeichert sind, wobei die Speichereinheit auslesbar ist von dem jeweiligen Auswertemittel.

8. System nach Anspruch 7,
**dadurch gekennzeichnet, dass**
jedes stationär angeordnete Sendemodul einen jeweiligen Sendekegel aufweist, wobei die Sendekegel von benachbarten stationär angeordneten Sendemodulen zumindest teilweise überlappen, und/oder wobei die gesamte Verfahrfläche mittels der stationär angeordneten Sendemodule beleuchtet ist, als Beleuchtung der Anlage.

9. Verfahren zur Ausrichtungsbestimmung eines Fahrzeugs innerhalb einer Anlage mittels eines Systems zur Ausrichtungsbestimmung nach mindestens einem der Ansprüche 1 bis 8, aufweisend die zeitlich aufeinanderfolgenden Verfahrensschritte:

wobei in einem ersten Verfahrensschritt, insbesondere in einer ersten Messung, linear polarisiertes Licht des stationär angeordneten Sendemoduls den Flüssigkristall (6) durchläuft, wobei dieser derart angesteuert wird, dass die Polarisation des Lichtes um einen ersten Winkel gedreht wird, wobei das Licht zumindest teilweise das zweite Polarisationsfilter (7) passiert und die Intensität $I_1$ des Lichts von dem Lichtsensor (8) bestimmt wird, wobei in einem zweiten Verfahrensschritt, insbesondere in einer zweiten Messung, linear polarisiertes Licht des stationär angeordneten Sendemoduls den Flüssigkristall (6) durchläuft, wobei dieser derart angesteuert wird, dass die Polarisation des Lichtes um einen zweiten Winkel gedreht wird, wobei das Licht zumindest teilweise das zweite Polarisationsfilter (7) passiert und die Intensität $I_2$ des Lichts von dem Lichtsensor (8) bestimmt wird,

wobei in einem dritten Verfahrensschritt aus den Intensitäten $I_1$ und $I_2$ die Ausrichtung des Fahrzeugs (13) auf der Verfahrfläche bestimmt wird, wobei der erste Winkel und der zweite Winkel ungleich sind, insbesondere wobei der erste Winkel und der zweite Winkel sich betragsmäßig um 90° unterscheiden oder sich betragsmäßig um einen Wert zwischen 80° und 100° unterscheiden.

10. Verfahren nach Anspruch 9,
**dadurch gekennzeichnet, dass**
die Ausrichtung des Fahrzeugs (13) durch einen Winkelversatz a relativ zu einem Referenzfahrzeug (13') bestimmt wird, insbesondere wobei das zweite Polarisationsfilter des Referenzfahrzeugs (13') parallel zum ersten Polarisationsfilter (5) angeordnet ist, wobei der Winkelversatz $\alpha$ aus den Intensitäten $I_1$

und $I_2$ berechnet wird gemäß $\alpha = \arctan \dfrac{I_1}{I_2}$.

11. Verfahren nach Anspruch 9 oder 10,
**dadurch gekennzeichnet, dass**
ein Steuerbefehl einer zentralen Steuerung (1) auf das Licht des stationär angeordneten Sendemoduls aufmoduliert wird,
wobei das Licht des stationär angeordneten Sendemoduls von dem Fahrzeug (13) ausgewertet wird und das Fahrzeug (13) gemäß dem Steuerbefehl gesteuert wird,
wobei das Fahrzeug (13) unter Berücksichtigung der gemessenen Ausrichtung des Fahrzeugs (13) und des Steuerbefehls gesteuert wird.

12. Verfahren nach einem der Ansprüche 9 bis 11,
**dadurch gekennzeichnet, dass**
das System mehrere stationär angeordnete Sendemodule aufweist, denen jeweils eine Identitätsinformation zugeordnet wird,
wobei die jeweilige Identitätsinformation auf das Licht des jeweiligen stationär angeordneten Sendemoduls aufmoduliert wird,
wobei dem Fahrzeug (13) ein Positionsbereich auf der Verfahrfläche zugeordnet wird, indem die Identitätsinformation aus dem von dem Fahrzeug (13) empfangenen Licht ausgewertet wird.

**Claims**

1. A system for determining the orientation of a vehicle (13) within a plant, having the vehicle (13) and a stationarily arranged transmission module, wherein the vehicle (13) is movable on a driving surface of the plant and has a receiving module, the transmission module has a light source (4), in particular a light-emitting diode, and a first polarisation filter (5), wherein the first polarisation filter (5) is in the form of a linear polarisation filter, so that linearly polarized light can be emitted from the transmission module,
**characterised in that**
the receiving module has a light sensor (8), a liquid crystal (6), a control means (10) for the liquid crystal and a second polarisation filter (7), wherein the second polarisation filter is in the form of a linear polarisation filter,
wherein the second polarisation filter (7) is arranged between the light sensor (8) and the liquid crystal (6), wherein the liquid crystal (6) is controllable by means of the control means (10) in such a manner that the polarisation of the linearly polarized light passing through the liquid crystal is rotated through a first angle or through a second angle, in particular through 0° or through 90°, wherein the first angle and the second angle are unequal,
wherein light from the light source (4), which has passed through the first polarisation filter (5), then the liquid crystal (6) and then the second polarisation filter (7), can be detected by means of the light sensor (8),
wherein the receiving module has a receiver (9) and an evaluation means (11),
wherein the receiver (9) is configured to measure a signal of the light sensor (8), namely a current,
wherein the evaluation means (11) is configured to determine the orientation of the vehicle (13) on the driving surface from two measured values of the light sensor,
wherein the system has a stationarily arranged receiving module associated with the stationarily arranged transmission module, wherein the stationarily arranged receiving module and the receiving module of the vehicle (13) are of the same kind,
wherein the vehicle (13) has a transmission module, wherein the transmission module of the vehicle and the stationarily arranged transmission module are of the same kind,
wherein a bi-directional data transfer between the vehicle (13) and the central control means (1) can be carried out by means of the transmission modules and receiving modules.

2. A system according to claim 1,
**characterised in that**
the transmission module has a current source (3) for the light source (4) and a converter (2),
wherein the light source (4) is controllable by means of the converter (2) **in that** the converter (2) controls the current source (3),
and/or **in that**
the light source (4) produces intensity-modulated light.

3. A system according to claim 2,
**characterised in that**

the converter (2) is connected to a central, in particular external, control means (1), in particular by means of a data bus,

wherein control commands of the control means (1) can be modulated upon the light of the light source (4) by means of the converter (2), with a frequency between 100 kHz and 10 MHz.

4. A system according to at least one of the preceding claims,
**characterised in that**
the vehicle (13) has a vehicle control means (12), wherein the vehicle (13) is in the form of a driverless transport vehicle,
wherein the vehicle control means (12) is connected to the evaluation means (11),
wherein the vehicle control means (12) is configured to use the orientation of the vehicle (13), determined by the evaluation means (11), to control the vehicle (13).

5. A system according to at least one of the preceding claims,
**characterised in that**
the receiving module is arranged at the upper side of the vehicle (13),
and/or **in that**
the stationarily arranged transmission module is arranged at the top of the interior of a warehouse receiving the plant.

6. A system according to at least one of the preceding claims,
**characterised in that**
the light used is visible light or infrared light.

7. A system according to at least one of the preceding claims,
**characterised in that**
the system for orientation determination has a plurality of stationarily arranged transmission modules, wherein each stationarily arranged transmission module has identity information which can be modulated upon the light of the specific stationarily arranged transmission module,
wherein a positional region on the driving surface can be clearly allocated to each stationarily arranged transmission module by means of the identity information,
wherein the system has a storage unit in which the respective positional regions associated with the respective identity information are stored, wherein the storage unit is readable by the respective evaluations means.

8. A system according to claim 7,
**characterised in that**
each stationarily arranged transmission module has a respective transmission cone,
wherein the transmission cones of adjacent, stationarily arranged transmission modules at least partially overlap,
and/or wherein the entire driving surface is illuminated by means of the stationarily arranged transmission modules, as illumination of the plant.

9. A method of determining the orientation of a vehicle within a plant by means of a system for determining orientation according to at least one of claims 1 to 8, having the chronologically consecutive method steps:

wherein in a first method step, in particular in a first measurement, linearly polarized light of the stationarily arranged transmission module passes through the liquid crystal (6), wherein the latter is controlled in such a manner that the polarisation of the light is rotated through a first angle, wherein the light at least partially passes through the second polarisation filter (7) and the intensity $I_1$ of the light is determined by the light sensor (8),
wherein in a second method step, in particular in a second measurement, linearly polarized light of the stationarily arranged transmission module passes through the liquid crystal (6), wherein the latter is controlled in such a manner that the polarisation of the light is rotated through a second angle, wherein the light at least partially passes through the second polarisation filter (7) and the intensity $I_2$ of the light is determined by the light sensor (8),
wherein in a third method step, the orientation of the vehicle (13) on the driving surface is determined from the intensities $I_1$ and $I_2$,
wherein the first angle and the second angle are unequal, in particular wherein the first angle and the second angle quantitively differ by 90° or quantatively differ by a value between 80° and 100°.

10. A method according to claim 9,
**characterised in that**
the orientation of the vehicle (13) is determined by an angular displacement $\alpha$ relative to a reference vehicle (13'), in particular wherein the second polarisation filter of the reference vehicle (13') is arranged parallel to the first polarisation filter (5),
wherein the angular displacement $\alpha$ is calculated from the intensities $I_1$ and $I_2$ according to

$$\alpha = \arctan \frac{I_1}{I_2} .$$

11. A method according to claim 9 or 10,

**characterised in that**

a control command of a central control means (1) is modulated upon the light of the stationarily arranged transmission module,

wherein the light of the stationarily arranged transmission module is evaluated by the vehicle (13) and the vehicle (13) is controlled according to the control command,

wherein the vehicle (13) is controlled taking into account the measured orientation of the vehicle (13) and the control command.

12. A method according to any one of claims 9 to 11, **characterised in that**

the system has a plurality of stationarily arranged transmission modules with which in each case there is associated identity information,

wherein the respective identity information is modulated upon the light of the respective stationarily arranged transmission module,

wherein a positional region on the driving surface is allocated to the vehicle (13) **in that** the identity information from the light received from the vehicle (13) is evaluated.

## Revendications

1. Système de détermination de l'orientation d'un véhicule (13) à l'intérieur d'une installation,

comprenant ledit véhicule (13) et un module d'émission à implantation fixe,

sachant que ledit véhicule (13) est mobile sur une surface de déplacement de l'installation, et est doté d'un module de réception,

le module d'émission comportant une source lumineuse (4), notamment une diode électroluminescente, et un premier filtre de polarisation (5), lequel premier filtre de polarisation (5) est réalisé sous la forme d'un filtre de polarisation linéaire, de façon telle qu'une lumière polarisée linéairement puisse être émise par ledit module d'émission, **caractérisé par le fait que**

le module de réception comporte un capteur de lumière (8), un cristal liquide (6), un moyen de commande (10) dédié audit cristal liquide, et un second filtre de polarisation (7), lequel second filtre de polarisation est réalisé sous la forme d'un filtre de polarisation linéaire,

ledit second filtre de polarisation (7) étant interposé entre ledit capteur de lumière (8) et ledit cristal liquide (6),

lequel cristal liquide (6) peut être piloté, à l'aide dudit moyen de commande (10), de telle sorte que la polarisation de la lumière polarisée linéairement, franchissant ledit cristal liquide, soit déroutée de la valeur d'un premier angle ou d'un second angle, en particulier de 0° ou de 90°,

ledit premier angle et ledit second angle étant inégaux,

sachant que de la lumière, émanant de la source lumineuse (4) et ayant parcouru le premier filtre de polarisation (5), puis le cristal liquide (6), puis le second filtre de polarisation (7), peut être détectée au moyen du capteur de lumière (8),

le module de réception étant pourvu d'un récepteur (9) et d'un moyen d'évaluation (11), ledit récepteur (9) étant conçu pour mesurer un signal du capteur de lumière (8), c'est-à-dire un courant,

ledit moyen d'évaluation (11) étant conçu pour déterminer l'orientation du véhicule (13), sur la surface de déplacement, sur la base de deux valeurs mesurées dudit capteur de lumière (8),

le système comprenant un module de réception à implantation fixe, affecté au module d'émission à implantation fixe, ledit module de réception à implantation fixe, et le module de réception du véhicule (13), étant de types similaires,

ledit véhicule (13) étant muni d'un module d'émission, le module d'émission dudit véhicule, et le module d'émission à implantation fixe, étant de types similaires,

sachant qu'une transmission bidirectionnelle de données, entre le véhicule (13) et la commande centrale (1), peut être effectuée au moyen des modules d'émission et des modules de réception.

2. Système selon la revendication 1, **caractérisé par le fait que**

le module d'émission comprend une source de courant (3) dévolue à la source lumineuse (4), et un convertisseur (2),

ladite source lumineuse (4) pouvant être commandée au moyen du convertisseur (2), du fait que ledit convertisseur (2) pilote ladite source de courant (3) ; et/ou **par le fait que**

ladite source lumineuse (4) émet de la lumière à intensité modulée.

3. Système selon la revendication 2, **caractérisé par le fait que**

le convertisseur (2) est connecté à une commande centrale (1), notamment extérieure, en particulier au moyen d'un bus de données,

des instructions de pilotage de ladite commande (1) pouvant être modulées, au moyen dudit convertisseur (2), sur la lumière de ladite source lumineuse (4) à une fréquence comprise entre 100 kHz et 10 MHz.

4. Système selon au moins l'une des revendications précédentes,

**caractérisé par le fait que**

le véhicule (13) est équipé d'une commande (12), ledit véhicule (13) étant réalisé en tant que véhicule de transport sans conducteur,

la commande (12) dudit véhicule étant connectée au moyen d'évaluation (11),

laquelle commande (12) du véhicule est conçue pour utiliser l'orientation dudit véhicule (13), déterminée par ledit moyen d'évaluation (11), en vue du pilotage dudit véhicule (13).

5. Système selon au moins l'une des revendications précédentes,
**caractérisé par le fait que**
le module de réception est disposé à la face supérieure du véhicule (13) ;
et/ou **par le fait que**
le module d'émission, à implantation fixe, est disposé à la face supérieure de l'espace interne d'une halle recevant l'installation.

6. Système selon au moins l'une des revendications précédentes,
**caractérisé par le fait que**
la lumière utilisée est de la lumière visible ou de la lumière infrarouge.

7. Système selon au moins l'une des revendications précédentes,
**caractérisé par le fait que**
ledit système de détermination d'orientation compte plusieurs modules d'émission à implantation fixe, chaque module d'émission, à implantation fixe, comportant une information d'identité pouvant être modulée sur la lumière du module d'émission considéré, à implantation fixe, une plage d'emplacements, sur la surface de déplacement, pouvant être attribuée de manière univoque à chaque module d'émission à implantation fixe, au moyen de ladite information d'identité,
ledit système présentant une unité de mémorisation dans laquelle les plages d'emplacements considérées sont stockées, avec attribution à l'information d'identité respective, ladite unité de mémorisation pouvant être lue par le moyen d'évaluation respectif.

8. Système selon la revendication 7,
**caractérisé par le fait que**
chaque module d'émission, à implantation fixe, est pourvu d'un cône émetteur respectif, sachant que les cônes émetteurs de modules d'émission voisins, à implantation fixe, se chevauchent au moins en partie,
et/ou sachant que la surface de déplacement est éclairée en totalité au moyen desdits modules d'émission à implantation fixe, en tant qu'éclairage de l'installation.

9. Procédé de détermination de l'orientation d'un véhicule à l'intérieur d'une installation, au moyen d'un système de détermination d'orientation conforme à au moins l'une des revendications 1 à 8, comprenant les étapes opératoires suivantes, en succession temporelle :

au cours d'une première étape opératoire, notamment lorsqu'une première mesure est effectuée, de la lumière du module d'émission à implantation fixe, polarisée linéairement, parcourt le cristal liquide (6) et ce dernier est piloté de telle manière que la polarisation de la lumière soit déroutée de la valeur d'un premier angle, sachant que la lumière franchit au moins en partie le second filtre de polarisation (7), et que l'intensité $I_1$ de ladite lumière est déterminée par le capteur de lumière (8),

au cours d'une deuxième étape opératoire, notamment lorsqu'une seconde mesure est effectuée, de la lumière du module d'émission à implantation fixe, polarisée linéairement, parcourt le cristal liquide (6) et ce dernier est piloté de telle manière que la polarisation de la lumière soit déroutée de la valeur d'un second angle, sachant que la lumière franchit au moins en partie ledit second filtre de polarisation (7), et que l'intensité $I_2$ de ladite lumière est déterminée par ledit capteur de lumière (8),

au cours d'une troisième étape opératoire, l'orientation du véhicule (13) sur la surface de déplacement est déterminée sur la base des intensités $I_1$ et $I_2$,

le premier angle et le second angle étant inégaux, sachant notamment que les valeurs dudit premier angle et dudit second angle diffèrent de 90°, ou diffèrent d'une valeur comprise entre 80° et 100°.

10. Procédé selon la revendication 9,
**caractérisé par le fait que**
l'orientation du véhicule (13) est déterminée par un décalage angulaire $\alpha$ par rapport à un véhicule de référence (13'), sachant, en particulier, que le second filtre de polarisation dudit véhicule de référence (13') est disposé parallèlement au premier filtre de polarisation (5),
ledit décalage angulaire $\alpha$ étant calculé sur la base des intensités $I_1$ et $I_2$, conformément à

$$\alpha = \arctan I_1 / I_2.$$

11. Procédé selon la revendication 9 ou 10,
**caractérisé par le fait**
**qu'**une instruction de pilotage d'une commande centrale (1) est modulée sur la lumière du module d'émission à implantation fixe,
laquelle lumière dudit module d'émission à implantation fixe est évaluée par le véhicule (13), et ledit véhicule (13) est commandé en conformité avec ladite instruction de pilotage,
sachant que le véhicule (13) est commandé avec prise en compte de l'orientation mesurée dudit véhicule (13), et de ladite instruction de pilotage.

12. Procédé selon l'une des revendications 9 à 11, **caractérisé par le fait que**
le système compte plusieurs modules d'émission à implantation fixe, à chacun desquels une information d'identité considérée est attribuée,
ladite information d'identité considérée étant modulée sur la lumière du module d'émission respectif à implantation fixe,
une plage d'emplacements, sur la surface de déplacement, étant attribuée audit véhicule (13) par évaluation de l'information d'identité émanant de la lumière reçue par ledit véhicule (13).

Fig. 1

13

13'

Fig. 2

Fig. 3

Fig. 4

**IN DER BESCHREIBUNG AUFGEFÜHRTE DOKUMENTE**

**In der Beschreibung aufgeführte Patentdokumente**

- DE 102013001358 A1
- EP 2913688 A1